# EUROPÄISCHE PATENTSCHRIFT

(11) **EP 1 203 624 B1**
(45) Veröffentlichungstag und Bekanntmachung des Hinweises auf die Patenterteilung: **27.04.2005**
(21) Anmeldenummer: 01123938.1
(22) Anmeldetag: 08.10.2001
(51) Int. Cl.: B21C 23/08, B21C 37/06, B21C 37/28

(54) **Verfahren zur Herstellung von Teilen eines Dachentwässerungssystemes und insbes. Etagenbogen**
Method for the production of parts for a roof drainage system, in particular pipe bends
Procédé pour la fabrication de pièces pour un système d'écoulement des eaux d'une toiture, en particulier de tuyaux coudés

(30) Priorität: 06.11.2000 DE 10054958; 29.12.2000 DE 20022075 U
(43) Veröffentlichungstag der Anmeldung: 08.05.2002
(73) Patentinhaber: Zambelli -Fertigungs-GmbH, 94481 Grafenau (DE)
(72) Erfinder: Zambelli, Franz, 94481 Grafenau (DE)
(74) Vertreter: Schön, Theodor

(56) Entgegenhaltungen:
- DE-A- 2 855 449
- DE-U- 8 626 975
- DE-U- 20 022 074
- GB-A- 456 970
- US-A- 1 916 645
- PATENT ABSTRACTS OF JAPAN vol. 006, no. 242 (M-175), 30. November 1982 (1982-11-30) -& JP 57 139424 A (SUMITOMO KINZOKU KOGYO KK), 28. August 1982 (1982-08-28)
- PATENT ABSTRACTS OF JAPAN vol. 1996, no. 03, 29. März 1996 (1996-03-29) & JP 07 292897 A (SEKISUI CHEM CO LTD), 7. November 1995 (1995-11-07)
- PATENT ABSTRACTS OF JAPAN vol. 1995, no. 07, 31. August 1995 (1995-08-31) -& JP 07 109805 A (SEKISUI CHEM CO LTD), 25. April 1995 (1995-04-25)

## Beschreibung

Die Erfindung bezieht sich auf ein Verfahren zur Herstellung von Bestandteilen eines Dachentwässerungssystemes, insbesondere von dünnwandigen Regenrinnenfallrohrern, Regenrinnenablauf-Rohrbogen, Etagenbogen und dergl. Rohrleitungsteilen aus einem Metall, wobei aus einem Ausgangsmaterial maschinell ein Rohrprofil erstellt und nachfolgend in Längenabschnitte abgelängt und weiter bearbeitet, insbesondere zu Bogenformen wird und einen in diesem Verfahren hergestellten Etagenbogen.

Regenrinnen-Fallrohre, Regenrinnenablauf-Rohrbögen und Etagenbögen für Regenrinnen-Fallrohre werden üblicher Weise aus einem wenigstens eine Längsnaht aufweisenden, meist maschinell hergestellten Rohrmaterial gefertigt, wobei Regenrinnenablauf-Rohrbögen und Etagenbögen herkömmlicherweise auch aus zwei entlang ihrer Längsränder miteinander zu verbindenden Halbschalen und gerade Fallrohre durch runden eines vorzugsweise endlosen Metallbandes zu einem mit einem in Längsrichtung verlaufenden Längsschlitz versehenen Profil und nachfolgendes Stumpfschweißen, insbesondere Widerstandsschweißen, der einander bezüglich des Längsschlitzes gegenüberliegenden Längsränder des vorgeformten Profiles hergestellt werden. Allen in dieser bekannten und gebräuchlichen Weise hergestellten Teilen eines Dachentwässerungssystemes ist gemeinsam, daß sämtliche Rohrformen, gleichgültig ob Fallrohre oder Rohrbogen, immer wenigstens eine Längsnaht aufweisen, was sich insbesondere aufgrund der sich aus den Eigenheiten der Montage eines Dachentwässerungssystemes ergebenden Verhältnisse als problematisch erweisen kann. Im Zuge der Montage werden Rohre und Bögen eines Dachentwässerungssystemes durch ineinanderstecken benachbarter Teile miteinander verbunden, wozu es erforderlich ist, daß zumindest die Rohrbogen an ihren beiden Enden unterschiedliche lichte Weiten aufweisen. Diese unterschiedlichen lichten Weiten eines Rohrbogens werden dadurch erzeugt, daß der Rohrbogen nach seiner Ausformung in einem weiteren Arbeitsgang an seinem einen Ende aufgeweitet wird. Dieses Aufweiten kann zu einem Undichtwerden und im Extremfall zu einem Aufplatzen der Schweißnaht des an sich bereits fertigen Bogens führen, was letztlich bedeutet, daß der betroffene Bogen nicht verwendbar, also Ausschuß ist.
Insgesamt ist der Einsatz von Schweißnähten an Rohrformen eines Dachentwässerungssystemes immer mit dem Risiko einer unzulänglichen Qualität der Schweißnaht bzw. einer Undichtheit der Schweißnaht verbunden, was eine ständige Kontrolle der Schweißnähte und damit einen erheblichen Aufwand erfordert

Die bisherige Technik zur Herstellung von Etagenbögen ist in der JP-PS 7-109805 und ist in charakteristischer Weise durch das Zusammensetzen von zwei in entgegengesetzten Richtungen gekrümmten Bogenteilen gekennzeichnet.

Aus dem Stand der Technik ist zudem beispielsweise aus der DE-U-86 26 975 die Verwendung eines Rohrmaterials mit einer einseitig verstärken bzw. verdickten Wandungsstärke für die Herstellung von Rohrbogen mit lediglich einer Krümmungsrichtung bekannt.
Ferner bezieht sich die DE-OS 28 55 449 auf die Herstellung von Rohrkrümmern, Kniestücken und Spiralen durch direktes Durchdrücken eines hohlen Halbfabrikates durch eine excentrische Öffnung und einen konzentrischen Spalt. Eine solche Herstellungsweise eignet sich zwar zur Herstellung in einer Richtung gekrümmter Kniestücke bzw. Rohrkrümmer ist aber für die Herstellung von Teilen mit zwei aufeinanderfolgenden, in entgegengesetzte Richtungen zeigende Krümmungen aufweisenden Rohrteilen, wie Rtagenbögen, völlig ungeeignet.

Schließlich offenbart die US-PS 1 916 645, eine Verfahrensweise und eine Vorrichtung, welche lediglich die Herstellung von Krümmern oder Rohrbogen mit gleichförmig in einer Richtung verlaufendem Krümmungsradius ermöglicht.

Mit diesen bisher insgesamt bekannt gewordenen Mitteln und Methoden zur Fertigung von Bestandteilen eines Dachentwässerungssystemes ist es nicht möglich die aus dem Vorhandensein von Nähten, seien es Schweiß-oder Falznähte resultierenden Nachteile zu beseitigen.

Aus diesen Nachteilen vorbekannter Fertigungsweisen resultiert die die Erfindung initiiernde Problemstellung, einen gangbaren Weg zur Beseitigung der auf dem Vorhandensein von Nähten insbesondere an Etagenbogenteilen des Dachentwässerungssystemes basierenden Mängel bekannter Fertigungsarten aufzuzeigen.

Mit dieser Problematik untrennbar verknüpft ist die weitere Problematik ein Herstellungsverfahren aufzuzeigen, welches, wenn auch nicht ausschließlich, zur Lösung des Problems geeignet ist

Zur Lösung des Hauptproblemes sieht die Erfindung ein Verfahren vor, welches dadurch gekennzeichnet ist, daß in einem ersten Verfahrensschritt das Ausgangsmaterial zumindest im Wesentlichen ungeformtes Metall, insbesondere dickwandiges Rohrmaterial, ist und daß aus diesem ungeformten Metall in einem ersten Bearbeitungsschritt im Wege des Fließpressens, insbesondere Kaltfließpressens, ein dünnwandiges, nahtloses Rohrprofil mit umlaufend gleichförmiger Wandungsstärke geformt wird,
und
daß in einem oder mehreren nachfolgenden Verfahrensschritt(en) Längenabschnitte dieses dünnwandigen, nahtlosen und geraden Rohrprofiles in Wege eines Streck-Ziehvorganges zu einem aufeinanderfolgend in zwei entgegengesetzte Richtungen gekrümmte Abschnitte aufweisenden Etagenbogen oder dergl. eines Dachentwässerungssystemes geformt werden.

Der Einsatz des Fließpress-Umformens führt zum einen zu einem über seinen Umfang hin ein homogenes Gefüge aufweisenden und nahtlosen Rohrmaterial und kann zum anderen mit einem erträglichen mechanischen und wirtschaftlichen Aufwand ausgeführt werden. Insbesondere ergibt das Fließpressen ein Rohrprofil, welches nach seiner Umformung zu Rohrbogen oder aber auch in einer geraden Form ohne jede Gefahr eines Aufplatzens oder Undichtwerdens bereichsweise, insbesondere endseitig aufweitbar ist. Da das Gefüge des im Wege des Fließpressverfahrens hergestellten nahtlosen Rohrmaterials in Fließrichtung und in Rohrlängsrichtung ausgerichtet ist eignet sich solches Rohrmaterial in besonders hervorragender Weise zur Weiteren Umformung unter Anwendung eines Streck-Ziehverfahrens.
Anstelle der Verwendung eines dickwandigen Rohrmaterials als Ausgangsmaterial kann naturgemäß auch jede andere Form eines im Wege des Fließpressens umformbaren Ausgangsmaterials eingesetzt werden. Insbesondere eignet sich die erfindungsgemäße Verfahrensweise in hervorragender Weise zur Herstellung von aus einem NE-Metall, insbesondere Kupfer oder Aluminium bzw. Zink, zu formenden Bestandteilen eines Dachentwässerungssystemes im Wege des Kalt-Fließpressens.

Die Umformung eines im Wege des Fließpressens als nahtloses Profilmaterial hergestellten Rohrprofiles zu Etagenbogenformen erfolgt, wie bereits angedeutet zweckmäßigerweise dadurch, daß ein Längenabschnitt des Rohrprofiles einenendes eingespannt wird und daß bei gleichzeitiger Anwendung eines teilkreisförmigen äußeren Formgebungsteiles in das nahtlose dünnwandige Rohrmaterial ein mit Streckrollen ausgestatteter Formkopf eingreift, mittels dessen das Rohrprofil entlang des teilkreisförmigen Formteiles zu einem Bogen geformt wird, wobei die Streckrollen des Formkopfes drehangetriebenen sind und wobei ferner wenigstens eine mit dem Außenumfang des Rohrmaterials zusammenwirkende Glättrolle vorgesehen ist, welche eventuelle Stauchfalten am Innenumfang des Rohrbogens formgebend zu einer glattflächigen Oberfläche glättet.

Der Etagenbogen zeichnet sich im Besonderen dadurch aus, daß er zumindest im Bereich zwischen seinen aufeinanderfolgend entgegengesetzt gekrümmten Bereichen mit wenigstens einer Prägung seiner Umfangswandung ausgestattet ist.

Dabei kann im Einzelnen vorgesehen sein, daß die Umfangswandung des Etagenbogens in einem zumindest mehr oder minder geradlinigen Bereich zwischen seinen aufeinanderfolgend entgegengesetzt gekrümmten Bereichen mit zwei örtlich begrenzten und einander bezüglich der Rohrachse gegenüberliegend angeordneten, lediglich eine Verformung seiner äußeren Oberflächenstruktur umfassenden Prägungen ausgestattet ist, wobei es sich empfehlen kann, daß von den einander bezüglich der Rohrachse gegenüberliegend angeordneten Prägungen die erste ein Herstellersymbol bzw. Herstellernamen und die zweite eine vorzugsweise technische Bezeichnung des Bogens, wie Type oder Größe oder dergl. darstellt.

Es kann in einfacheren Ausführungsfomen aber auch vorgesehen sein, die Umfangswandung des Etagenbogens im Bereich zwischen seinen aufeinanderfolgend entgegengesetzt gekrümmten Bereichen mit einer wenigstens teilweise umlaufenden Prägung versehen ist, wobei die Prägung aus einer oder mehreren wenigstens der äußeren Umfangsfläche des Etagenbogens gegenüber erhabenen Ringrippen oder vertieften Rillen bestehen kann, welche sich, gegebenenfalls mit Unterbrechungen über den Rohrumfang hin erstrecken.
Selbstverständlich kann auch eine Mischform unterschiedlicher Prägungsbilder verwendet werden, wie beispielsweise eine Kombination von Rillen oder Rippen und Symbolen.

In einer weiteren Ausgestaltung eines Etagenbogens kann dann auch noch vorgesehen sein, daß seine Umfangswandung zusätzlich noch im Bereich wenigstens eines seiner beiden Enden mit einer weiteren Prägung ausgestattet ist, wobei auch diese Prägung in einem geradlinigen Endbereich des Etagenbogens untergebracht ist. Dabei kann auch die im Bereich eines seiner beiden Enden angeordnete weitere Prägung der Umfangswandung eines Etagenbogens aus zwei einander bezüglich der Rohrachse gegenüberliegend angeordneten Teilprägungen bestehen, wobei eine der beiden Prägungen eine Herstellerbezeichnung bzw. ein Herstellersymbol und die gegenüberliegende Prägung eine Typen-oder Größen- bzw. Materialbezeichnung, gegebenenfalls zusätzlich auch eine Angabe der Materialqualität des Bogens darstellen kann.
Unabhängig von einer solchen bevorzugten speziellen Ausbildung der Prägung in der Umfangswandung eines Etagenbogens kann die Prägung aber auch neutral ausgeführt sein und ganz einfach als lediglich wenigstens teilweise, gegebenenfalls auch als voll umlaufende Prägung, beispielsweise in Form wenigstens einer Rippe oder Rille bzw. dergl. ausgebildet sein.

Die Erfindung ist in der nachfolgenden Beispielsbeschreibung anhand zweier in der Zeichnung dargestellter Ausführungsbeispiele im Einzelnen beschrieben.

In der Zeichnung zeigt die
Figur 1 eine schaubildliche Darstellung einer ersten Ausführungsform eines erfindungsgemäß gestalteten Etagenbogens;
Figur 2 eine schaubildliche Darstellung einer zweiten Ausführungsform eines erfindungsgemäß gestalteten Etagenbogens;.

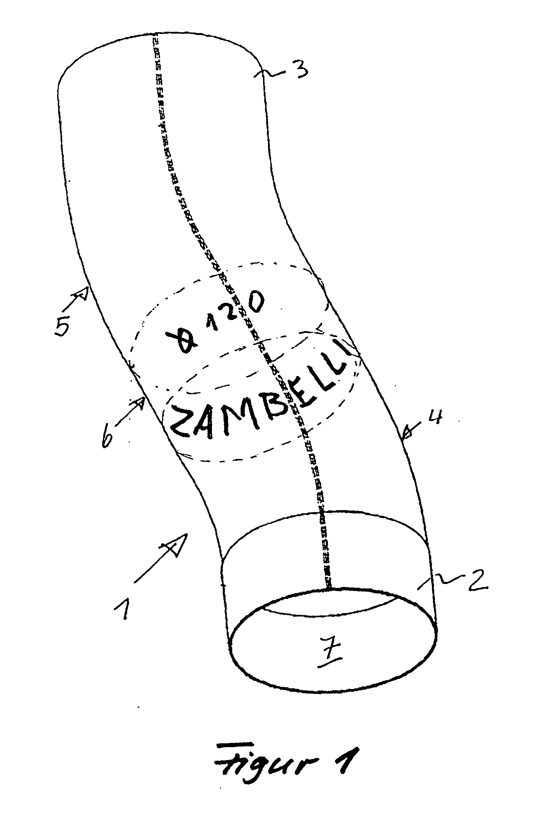

Der Etagenbogen 1 besteht im Wesentlichen aus zwei geraden Endbereichen 2 und 3, welche jeweils über eine bogenförmige Krümmung 4 bzw. 5 in einen gleichfalls geraden Mittelbereich 6 übergehen. Der eine 2 der beiden Endbereiche des Etagenbogens 1 ist mit einer Aufweitung 7 zum Einstecken eines in der Zeichnung nicht gezeigten anschließenden Rohrleitungsteiles versehen. Innerhalb des Mittelbereiches ist der in der Figur 1 dargestellte Etagenbogen mit zwei bezüglich seiner Rohrachse einander gegenüberliegend angeordneten Prägungen ausgestattet, wobei die eine 9 der beiden Prägungen ein Herstellersymbol bzw. den Herstellernamen und die gegenüberliegende Prägung 10 eine technische Bezeichnung, hier eine Durchmesserangabe darstellt.

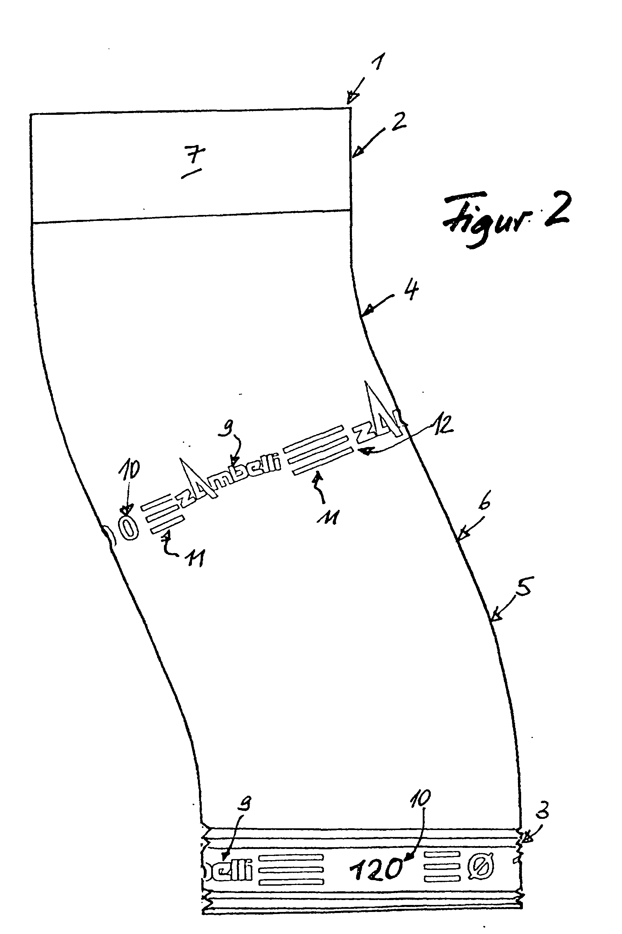

Bei der in der Figur 2 dargestellten Ausführungsform sind gleichfalls zwei bezüglich seiner Rohrachse einander gegenüberliegend angeordnete Prägungen 9 und 10 im Mittelbereich 6 vorgesehen, von denen die eine 9 ein Herstellersymbol bzw. einen Herstellernamen und die andere 10 eine Durchmesserangabe darstellt. Zusätzlich zu diesen beiden Prägungen 9 und 10 ist hier im Mittelbereich 6 eine weitere Prägung mit umlaufend ausgebildeten Rillen 11 und teilweise umlaufenden Rillen 12 vorgesehen. Ferner ist bei dieser Ausführungsform der dem mit einer Aufweitung versehenen gegenüberliegende Endbereich 3 seinerseits mit einer Prägung versehen, welche in der gezeigten Ausführungsform aus einer Anzahl umlaufender Rillen besteht.

## Patentansprüche

1. Verfahren zur Herstellung von dünnwandigen Etagenbogen, d.h. mehrfach gekrümmten Rohrleitungsteilen, aus einem Metall, wobei aus einem Ausgangsmaterial maschinell ein Rohrprofil erstellt und nachfolgend in Längenabschnitte abgelängt sowie weiter bearbeitet, insbesondere zu Bogenformen geformt wird,
**dadurch gekennzeichnet,**
**daß** in einem ersten Verfahrensschritt das Ausgangsmaterial zumindest im Wesentlichen ungeformtes Metall, insbesondere dickwandiges Rohrmaterial, ist und daß aus diesem ungeformten Metall in einem ersten Bearbeitungsschritt im Wege des Fließpressens, insbesondere Kaltfließpressens, ein dünnwandiges, nahtloses Rohrprofil mit umlaufend gleichförmiger Wandungsstärke geformt wird,
und
**daß** in einem oder mehreren nachfolgenden Verfahrensschritt(en) Längenabschnitte dieses dünnwandigen, nahtlosen und geraden Rohrprofiles in Wege eines Streck-Ziehvorganges zu einem aufeinanderfolgend in zwei entgegengesetzte Richtungen gekrümmte Abschnitte aufweisenden Etagenbogen oder dergl. eines Dachentwässerungssystemes geformt werden.

2. Verfahren nach Anspruch 1, **dadurch gekennzeichnet, daß** dem der Ausformung eines Bogens zugeordneten Streck-Ziehvorgang ein Glättvorgang, insbesondere hinsichtlich der innenliegenden Wandung eine Etagenbogens nachgeschaltet ist.

3. Verfahren nach Anspruch 1 und 2, **dadurch gekennzeichnet, daß** bei dessen einseitiger Einspannung zur Ausformung eines Etagenbogens in einem Streck-Ziehvorgang ein einen den beabsichtigten Krümmungen des Etagenbogens entsprechenden Durchmesser aufweisendes bogenförmiges Widerlager und ein in das Rohrprofil eingreifender, drehangetriebene Rollen aufweisender Formkopf eingesetzt werden.

4. Verfahren nach Anspruch 1 bis 3, **dadurch gekennzeichnet, daß** es zur Herstellung von aus NE-Metallen zu bildenden Etagenbogen eines Dachentwässerungssystemes eingesetzt ist.

5. Etagenbogen, der mittels eines Verfahrens nach einem der Ansprüche 1 bis 4 hergestellt ist, **dadurch gekennzeichnet, daß** er in einem Fließpress-Ziehvorgang aus einem geradlinigen Rohrmaterialabschnitt hergestellt ist und die Fließrichtung des Materials zumindest im Bereich des Außenumfanges der beiden zueinander entgegengesetzt gerichteten Krümmungsbereiche des den Etagenbogen ergebenden Rohrmaterialabschnittes gleichgerichtet ist.

6. Etagenbogen nach Anspruch 5, **dadurch gekennzeichnet, daß** seine Umfangswandung zumindest im Bereich zwischen seinen aufeinanderfolgend entgegengesetzt gekrümmten Bereichen mit wenigstens einer, vorzugsweise mit zwei einander bezüglich der Rohrachse gegenüberliegend angeordneten Prägungen seiner Umfangswandung ausgestattet ist.

7. Etagenbogen nach Anspruch 5 oder 6, **dadurch gekennzeichnet, daß** von den einander bezüglich der Rohrachse gegenüberliegend angeordneten Prägungen die erste ein Herstellersymbol bzw. Herstellernamen und die zweite eine Bezeichnung des Bogens darstellt.

8. Etagenbogen nach Anspruch 5, **dadurch gekennzeichnet, daß** seine Umfangswandung im Bereich zwischen seinen aufeinanderfolgend entgegengesetzt gekrümmten Bereichen mit einer wenigstens teilweise umlaufenden, insbesondere rillenförmigen Prägung versehen ist, wobei die Prägungen insbesondere teils aus rillenförmigen und teils mit symbolartigen Elementen bestehen.

9. Etagenbogen nach einem der Ansprüche 5-8, **dadurch gekennzeichnet, daß** seine Umfangswandung zusätzlich im Bereich wenigstens eines seiner beiden Enden mit mindestens einer weiteren Prägung, insbesondere einer aus zwei einander bezüglich der Rohrachse gegenüberliegend angeordneten Teilprägungen bestehenden Prägung ausgestattet ist, .

10. Etagenbogen nach einem der Ansprüche 5-9, **dadurch gekennzeichnet, daß** die Prägungen seiner Umfangswandung lediglich eine Verformung seiner äußeren Oberflächenstruktur umfassen.

## Claims

1. Method for producing thin-walled swan-neck bends, i.e. multiply curved pipeline parts, consisting of a metal, wherein a pipe profile is created mechanically from a starting material and then cut to length into length sections and further processed, in particular shaped into bend shapes, **characterised in that** in a first method step, the starting material is at least substantially unshaped metal, in particular thick-walled tubular material, and **in that**, in a first processing step, a thin-walled, seamless tubular profile with a peripheral uniform wall thickness is shaped from this unshaped metal by extrusion, in particular cold extrusion, and **in that**, in one or more subsequent method step(s), longitudinal sections of this thin-walled, seamless and straight tubular profile are shaped by a stretch-drawing process to form a swan-neck bend or the like, which has sections consecutively curved in two opposing directions, of a roof drainage system.

2. Method according to claim 1, **characterised in that** a smoothing process, in particular with respect to the inner wall of a swan-neck bend, is connected downstream from the stretch-drawing process associated with the forming of a bend.

3. Method according to claim 1 and 2, **characterised in that** during its one-sided clamping for forming a swan-neck bend in a stretch-drawing process, a bent abutment having a diameter corresponding to the intended curves of the swan-neck bend and a forming head engaging in the tubular profile and having rotationally driven rollers are used.

4. Method according to claim 1 to 3, **characterised in that** it is used to produce swan-neck bends of a roof drainage system to be formed from non-ferrous metals.

5. Swan-neck bend, which is produced by a method according to any one of claims 1 to 4, **characterised in that** it is produced from a straight tubular material section by an extrusion-drawing process and the flow direction of the material, at least in the region of the outer periphery of the two curved regions, which are directed in opposing directions to one another, of the tubular material section producing the swan-neck bend, is oriented in the same direction.

6. Swan-neck bend according to claim 5, **characterised in that** its peripheral wall, at least in the region between its regions which are consecutively curved in opposing directions is equipped with at least one, preferably two, embossings of its peripheral wall arranged to oppose one another with respect to the pipe axis.

7. Swan-neck bend according to claim 5 or 6, **characterised in that**, of the embossings arranged to oppose one another with respect to the pipe axis, the first is a producer symbol or producer name and the second is a designation of the bend.

8. Swan-neck bend according to claim 5, **characterised in that** its peripheral wall is provided with an at least partially peripheral, in particular flute-shaped embossing in the region between its regions which are consecutively curved in opposing directions, the embossings in particular consisting partially of flute-shaped elements and partially of symbol-like elements.

9. Swan-neck bend according to any one of claims 5 to 8, **characterised in that** its peripheral wall is also provided in the region of at least one of its two ends with at least one further embossing, in particular an embossing consisting of two part embossings arranged to oppose one another with respect to the pipe axis.

10. Swan-neck bend according to any one of claims 5 to 9, **characterised in that** the embossings of its peripheral wall only comprise a deformation of its outer surface structure.

## Revendications

1. Procédé de fabrication de coudes d'étage, à savoir de segments de tuyaux coudés, métalliques à paroi mince, suivant lequel, à partir d'un matériau de base, est fabriqué mécaniquement un profil tubulaire duquel sont ensuite découpés des segments longitudinaux recevant un traitement ultérieur pour présenter plus particulièrement une forme coudée, **caractérisé en ce que**
- au cours d'une première étape, le matériau de base qui est pour l'essentiel du métal non façonné, en particulier du matériau tubulaire à paroi épaisse, est façonné par extrusion, en particulier par extrusion à froid, un profil tubulaire sans ligne de jointure, à paroi mince, présentant la même épaisseur sur tout son pourtour,
- au cours d'une ou de plusieurs étapes ultérieures, les segments longitudinaux découpés du profil tubulaire droit sans ligne de jointure, à paroi mince, sont étirés pour former des coudes d'étage de tuyaux de descente des eaux pluviales, qui comportent deux zones courbes prolongeant l'une l'autre, présentant chacune une courbure en une direction différente.

2. Procédé selon la revendication 1 **caractérisé en ce que** le processus d'étirage permettant la formation des zones courbes est suivi d'un processus de lissage, en particulier de la face intérieure desdits coudes d'étage.

3. Procédé selon les revendications 1 et 2 **caractérisé en ce que** lors du serrage unilatéral du segment tubulaire en vue de la formation d'un coude d'étage par extrusion, sont utilisés un élément de butée courbe avec un diamètre correspondant aux courbures souhaitées du coude d'étage, et, une tête de façonnage s'engageant dans le profil tubulaire et comportant des rouleaux entraînés en rotation.

4. Procédé selon les revendications 1 à 3 **caractérisé par** son utilisation pour la fabrication de coudes d'étage en métaux non ferreux d'un système de tuyaux de descente des eaux pluviales.

5. Coude d'étage fabriqué au moyen du procédé conforme à l'une des revendications 1 à 4 **caractérisé en ce que** il est fabriqué à partir d'un segment de profil tubulaire par un procédé d'extrusion et d'étirage et **en ce que** la direction d'écoulement du matériau est la même au moins dans la zone de la périphérie des deux zones courbe à courbures en sens opposé l'une à l'autre, du coude d'étage.

6. Coude d'étage selon la revendication 5 **caractérisé en ce que** sa paroi est pourvue, au moins dans la zone située entre les deux zones courbes à courbures en sens opposé l'une à l'autre, d'au moins un mais de préférence de deux estampages se faisant face par rapport à l'axe tubulaire.

7. . Coude d'étage selon les revendications 5 ou 6 **caractérisé en ce que** le premier des deux estampages se faisant face par rapport à l'axe tubulaire est constitué du symbole, respectivement du nom du fabricant, tandis que le second estampage est constitué de la désignation spécifique du coude.

8. Coude d'étage selon la revendication 5 **caractérisé en ce que** la zone de la paroi située entre les deux zones courbes à courbures en sens opposé l'une à l'autre, est pourvue au moins sur une partie de son pourtour d'un estampage, en particulier d'un estampage rainuré, l'estampage étant composé pour partie de rainures et pour partie d'éléments symboliques.

9. Coude d'étage selon l'une des revendications 5 à 8 **caractérisé en ce que** sa paroi comporte, au moins dans la zone de l'une des extrémités du coude, un autre estampage, en particulier un estampage composé de deux estampages partiels disposés en se faisant face par rapport à l'axe tubulaire.

10. Coude d'étage selon l'une des revendications 5 à 9 **caractérisé en ce que** les estampages sont constitués d'une simple déformation de la structure superficielle de sa paroi.
